# EUROPEAN PATENT APPLICATION

(11) **EP 4 246 876 A1**
(43) Date of publication of application: **20.09.2023**
(21) Application number: 22193283.3
(22) Date of filing: 31.08.2022
(51) Int. Cl.: H04L 9/08, H04L 9/40

(54) **QUANTUM CRYPTOGRAPHIC COMMUNICATION SYSTEM, KEY MANAGEMENT DEVICE, AND KEY MANAGEMENT METHOD**

(30) Priority: 15.03.2022 JP 2022040457
(71) Applicant: KABUSHIKI KAISHA TOSHIBA, Minato-ku Tokyo 105-0023 (JP)
(72) Inventor: DOI, Kazuaki, Tokyo (JP); NAKASHIMA, Toshiki, Tokyo (JP); MATSUMOTO, Mari, Tokyo (JP); TANIZAWA, Yoshimichi, Tokyo (JP)
(74) Representative: Marks & Clerk LLP

(57) **Abstract**

According to an arrangement, a quantum cryptographic communication system (100) includes a first quantum key distribution (QKD) device (10a), and a first key management device (20a). The first QKD device (10a) that shares a quantum encryption key with a second QKD device through QKD. The first key management device (20a) includes a reception unit (22a) and a first hardware security module (HSM) (26a). The reception unit (22a) receives the quantum encryption key from the first QKD device (10a). The first HSM (26a) includes a storage unit, a generation unit (27a), and a first encryption unit (28a). The storage unit stores a first encryption key therein. The generation unit (27a) generates an application key used in an encryption process by a cryptographic application. The first encryption unit (28a) that encrypts, with the first encryption key, the application key transmitted to a second key management device connected to the second QKD device.

## Description

### FIELD

The present disclosure relates to a quantum cryptographic communication system, a key management device, and a key management method.

### BACKGROUND

The advancement of information and communication technologies has enabled exchange of a wide variety of data, and ensuring the confidentiality, security, and the like of information to be transmitted has become a major issue. The quantum cryptographic communication technology is expected to be put into practical use as a cryptographic technology that cannot be deciphered even if the computing power of computers is improved.

### BRIEF DESCRIPTION OF THE DRAWINGS

FIG. 1 is a diagram for describing an example of a basic structure of a key management system;
FIG. 2 is a diagram for describing an example of a functional structure of a conventional key management device;
FIG. 3A is a diagram illustrating an example of a functional structure of a quantum cryptographic communication system according to a first arrangement;
FIG. 3B is a diagram illustrating an example of the functional structure of the quantum cryptographic communication system according to the first arrangement;
FIG. 4 is a diagram for describing a process example by a key management device and a cryptographic application execution device according to the first arrangement;
FIG. 5 is a flowchart expressing an example of an application key transmission process between sites in the first arrangement;
FIG. 6 is a flowchart expressing an example of an application key supply process in the site in the first arrangement;
FIG. 7A is a diagram illustrating an example of a functional structure of a quantum cryptographic communication system according to a second arrangement;
FIG. 7B is a diagram illustrating an example of the functional structure of the quantum cryptographic communication system according to the second arrangement;
FIG. 8A is a diagram for describing a process example by a QKD device and a key management device in the second arrangement;
FIG. 8B is a diagram for describing the process example by the QKD device and the key management device in the second arrangement;
FIG. 9 is a flowchart expressing an example of an application key transmission process between the sites in the second arrangement;
FIG. 10A is a diagram illustrating an example of a functional structure of a quantum cryptographic communication system according to a third arrangement;
FIG. 10B is a diagram illustrating an example of the functional structure of the quantum cryptographic communication system according to the third arrangement;
FIG. 11 is a flowchart expressing an example of an application key transmission process between the sites in the third arrangement;
FIG. 12A is a diagram illustrating an example of a functional structure of a quantum cryptographic communication system according to a fourth arrangement;
FIG. 12B is a diagram illustrating an example of the functional structure of the quantum cryptographic communication system according to the fourth arrangement;
FIG. 13 is a flowchart expressing an example of an application key transmission process between the sites in the fourth arrangement;
FIG. 14A is a diagram illustrating an example of a functional structure of a quantum cryptographic communication system according to a fifth arrangement;
FIG. 14B is a diagram illustrating an example of the functional structure of the quantum cryptographic communication system according to the fifth arrangement;
FIG. 15 is a flowchart expressing an example of a switching process for an inter-site encryption method in the fifth arrangement;
FIG. 16 is a diagram illustrating a first modification of sharing an HSM;
FIG. 17 is a diagram illustrating a second modification of sharing the HSM;
FIG. 18 is a diagram illustrating an example of a hardware structure of main parts of the QKD device in any of the first to the fifth arrangements; and
FIG. 19 is a diagram illustrating an example of a hardware structure of main parts of the key management device and the cryptographic application execution device in any of the first and the fifth arrangements and a QKDN manager in the fifth arrangement.

### DETAILED DESCRIPTION

According to an arrangement, a quantum cryptographic communication system includes a first quantum key distribution (QKD) device, and a first key management device. The first QKD device that shares a quantum encryption key with a second QKD device through QKD. The first key management device includes a reception unit and a first hardware security module (HSM). The reception unit receives the quantum encryption key from the first QKD device. The first HSM includes a storage unit, a generation unit, and a first encryption unit. The storage unit stores a first encryption key therein. The generation unit generates an application key used in an encryption process by a cryptographic application. The first encryption unit that encrypts, with the first encryption key, the application key transmitted to a second key management device connected to the second QKD device.

With reference to the accompanying drawings, arrangements of a quantum cryptographic communication system, a key management device, and a key management method are described in detail below.

From the viewpoint of information security, quantum cryptographic communication systems need to be operated safely with countermeasures against various security attacks. Possible security attacks against key management systems include unauthorized access to the key management system to seize quantum encryption keys when the quantum encryption keys are generated by the key management system, the quantum encryption keys are stored in the key management system, or the quantum encryption keys are transferred. Therefore, it is necessary to deal with these attacks.

There is a security device called a hardware security module (HSM). The HSM can safely store encryption keys and perform encryption processes, for example, from the perspective of information security, and upon the detection of various types of unauthorized access including physical access, the HSM can detect and handle the abnormality by, for example, erasing stored encryption keys. By implementing key generation, key storage, and encryption at key transfer in the HSM, the possibility of theft of the key in the plaintext state is minimized.

First, an example of a structure of a key management system for quantum cryptographic communication is described.

### Example of basic structure

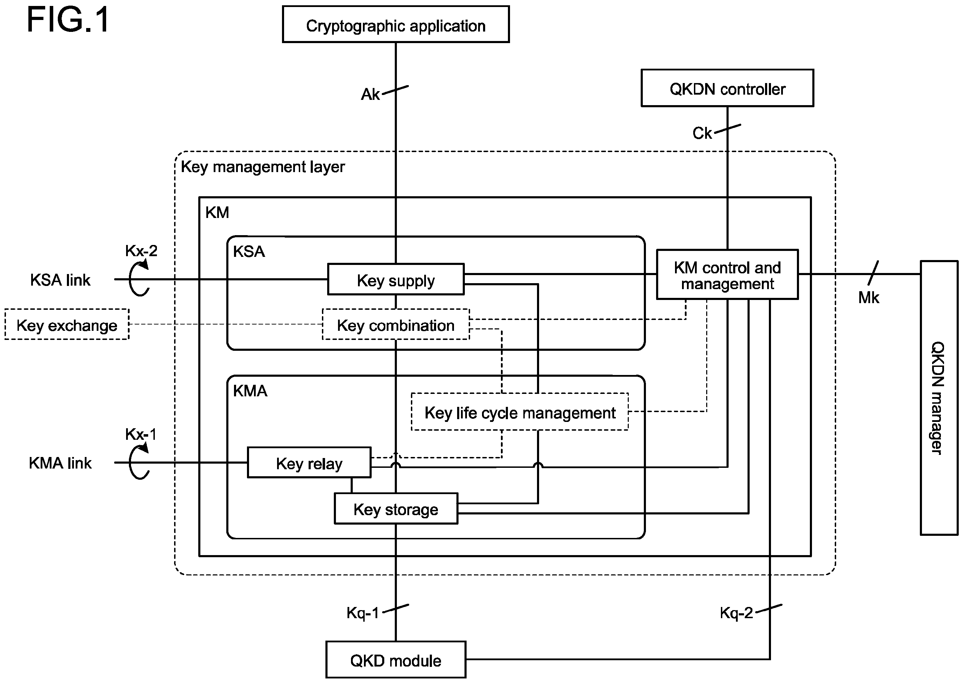

FIG. 1 is a diagram for describing an example of a basic structure of a key management system. FIG. 1 is a diagram expressed as a basic structure diagram of a key management system in ITU-T Y.3803: Quantum key distribution networks - Key management.

"KM" stands for key management and corresponds to a key management system (key management device). "QKD module" is a quantum cryptographic communication device (quantum key distribution device), which generates quantum encryption keys. "Cryptographic application" is a cryptographic application that receives a key (quantum encryption key or application key (hereinafter simply referred to as an "application key")) stored in the key management system from the KM and executes the application in a secure manner while performing cryptographic communication. "QKDN controller" is a device that controls devices related to quantum cryptographic communication, and "QKDN manager" is a device that manages the entire quantum cryptographic communication network (quantum key distribution network (QKDN)).

Next, the inside of the KM is described. "KMA" stands for key management agent and indicates the entire key management function. "KSA" stands for key supply agent and represents the entire key supply function.

"Key storage" is a function that stores keys (quantum encryption keys or application keys). Generally, the application key is stored, but if the key is shared between sites that are equipped with quantum cryptographic communication devices and have QKD links directly connected, the quantum encryption key may be stored.

"Key relay" is a function that transfers application keys to another site, encrypts the application keys using quantum cryptographic communication and transfers the application keys to another site. An example of implementing "Key relay" is described in, for example, R. Takahashi, Y. Tanizawa and A. Dixon, "A high-speed key management method for quantum key distribution network," 2019 Eleventh International Conference on Ubiquitous and Future Networks (ICUFN), Zagreb, Croatia, 2019, pp. 437-442.

"Key supply" is a function that supplies keys to the cryptographic application. "Key control and management" is a function that controls and manages the key management system.

The functions of "Key life cycle management", "Key combination", and "Key exchange" are not described herein because these functions are out of the scope of the arrangements (dotted line parts).

Next, to clarify the differences from the structure of a first arrangement, the functional structure of a conventional key management device that processes KM in FIG. 1 is described.

### Conventional functional structure

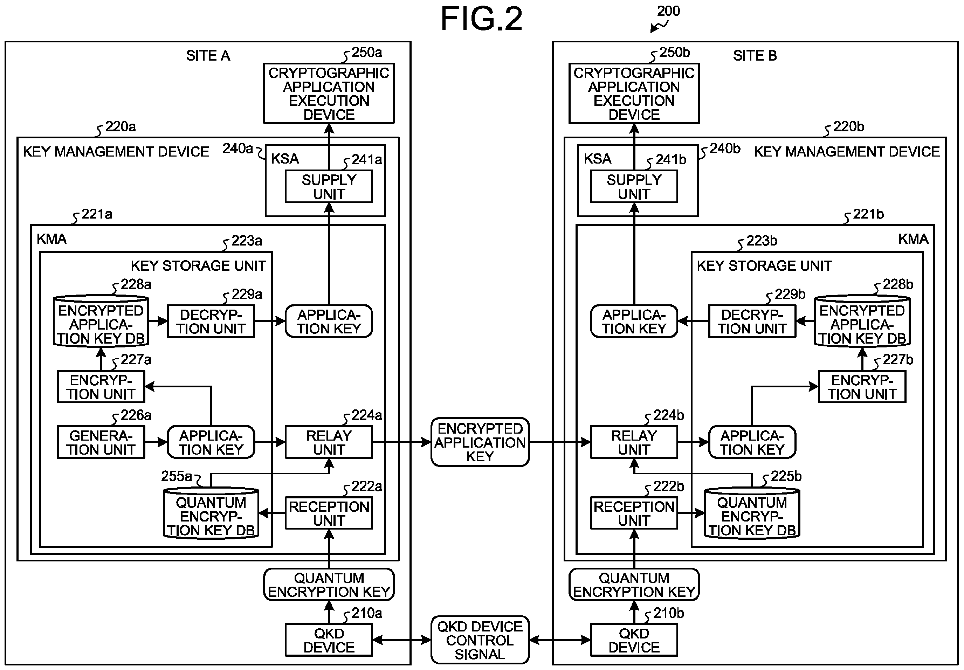

FIG. 2 is a diagram for describing a functional structure of conventional key management devices 220a and 220b. The process of key storage in a site A is described. First, a generation unit 226a in the site A generates an application key in a plaintext state. Next, an encryption unit 227a performs encryption for DB protection and stores the encrypted application key in an encrypted application key DB 228a.

Next, a process of transferring the application key from the site A to a site B is described. First, the application key is subjected to one time pad (OTP) encryption for the purpose of secured transfer to the site B. Specifically, a reception unit 222a receives a quantum encryption key in a plaintext state from a QKD device 210a. Then, a relay unit 224a OTP-encrypts the application key in the plaintext state using the quantum encryption key, and generates an OTP-encrypted application key. The relay unit 224a transmits the OTP-encrypted application key to the site B.

In the key management device 220b at the site B, a relay unit 224b having received the OTP-encrypted application key from the key management device 220a at the site A performs OTP decryption using the quantum encryption key in a quantum encryption key DB 225b to obtain the application key in the plaintext state.

For the key storage process in the site B, an encryption unit 227b encrypts the application key in the plaintext state for DB protection, and stores the encrypted application key in an encrypted application key DB 228b.

Next, the operation of transferring the application key from the key management device 220a to a cryptographic application execution device 250a at the site A when the cryptographic application execution device 250a requests for the application key is described. First, a decryption unit 229a reads out the encrypted application key from the encrypted application key DB 228a, executes decryption, and obtains the application key in the plaintext state. A supply unit 241a then transfers the application key encrypted by cryptographic communication to the cryptographic application execution device 250a.

The operation of transferring the application key from the key management device 220b to a cryptographic application execution device 250b at the site B when the cryptographic application execution device 250b requests for the application key is also similar to the operation in the case at the site A.

The cryptographic communication used to transfer the application key from the key management device 220a (220b) to the cryptographic application execution device 250a (250b) may be, for example, https communication. Similarly, https communication, for example, is used for the cryptographic communication used to transfer the quantum encryption key from the QKD device 210a (210b) to the key management device 220a (220b). For example, advanced encryption standard (AES) is used for the encryption algorithm of the encryption unit 227a (227b).

The overall operation has been described above. Immediately after the generation unit 226a generates the application key in a KMA 221a and immediately after the decryption units 229a and 229b decrypt the encrypted application key in the KMAs 221a and 221b, the application key in the plaintext state exists. Generally, this application key in the plaintext state exists in a volatile memory of a computer, and if an attacker gains unauthorized access to the key management devices 220a and 220b and hacks the management authority, the attacker can access the volatile memory and take the application key in the plaintext state. In the following arrangements, a mechanism that solves these problems is described.

### First arrangement

A quantum cryptographic communication system according to a first arrangement is described.

### Example of functional structure

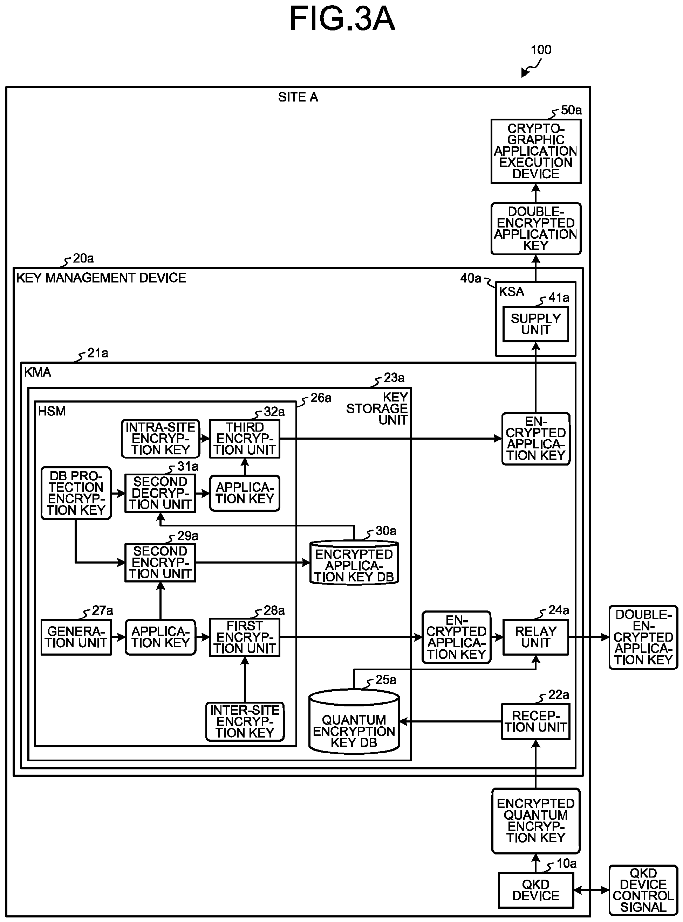

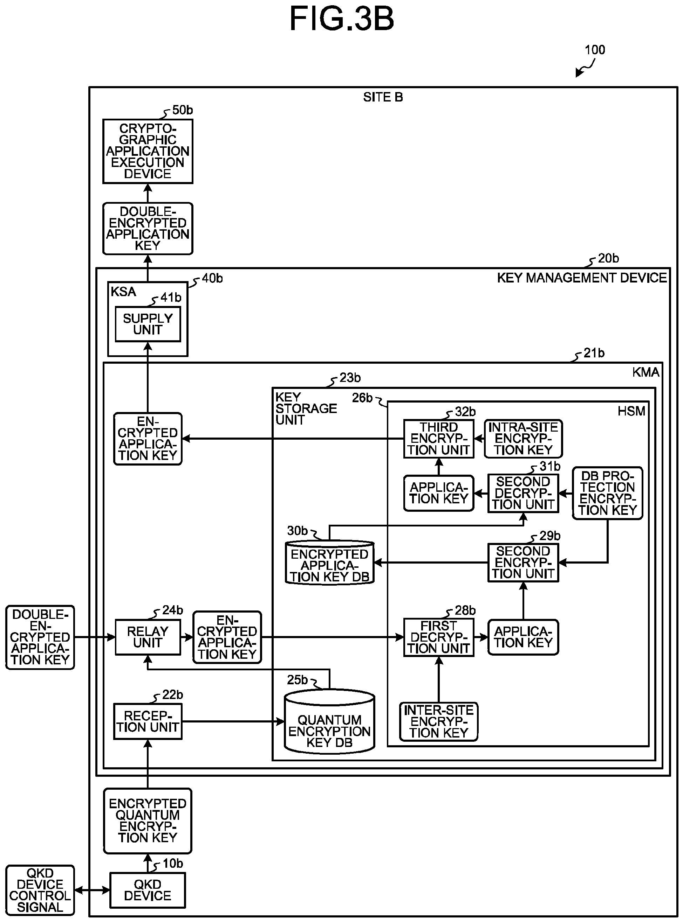

FIG. 3A and FIG. 3B are diagrams illustrating examples of functional structures of a quantum cryptographic communication system 100 according to the first arrangement. In FIG. 3A and FIG. 3B, quantum cryptographic communication is performed between the sites A and B.

The quantum cryptographic communication system 100 according to the first arrangement includes a QKD device 10a, a key management device 20a, and a cryptographic application execution device 50a at the site A, and a QKD device 10b, a key management device 20b, and a cryptographic application execution device 50b at the site B.

The key management device 20a at the site A includes a KMA 21a and a KSA 40a. The KMA 21a includes a reception unit 22a, a key storage unit 23a, and a relay unit 24a. The key storage unit 23a includes a quantum encryption key DB 25a, an HSM 26a, and an encrypted application key DB 30a. The HSM 26a includes a generation unit 27a, a first encryption unit 28a, a second encryption unit 29a, a second decryption unit 31a, and a third encryption unit 32a. The HSM 26a also includes, inside the HSM 26a, a storage unit that stores an inter-site encryption key (first encryption key), a DB protection encryption key (second encryption key), and an intra-site encryption key (third encryption key) therein.

The KSA 40a includes a supply unit 41a.

The key management device 20b at the site B includes a KMA 21b and a KSA 40b. The KMA 21b includes a reception unit 22b, a key storage unit 23b, and a relay unit 24b. The key storage unit 23b includes a quantum encryption key DB 25b, an HSM 26b, and an encrypted application key DB 30b. The HSM 26b includes a first decryption unit 28b, a second encryption unit 29b, a second decryption unit 31b, and a third encryption unit 32b. The HSM 26b includes, inside the HSM 26b, a storage unit that stores the inter-site encryption key (first encryption key), the DB protection encryption key (second encryption key), and the intra-site encryption key (third encryption key) therein. The KSA 40b includes a supply unit 41b.

The HSM 26a (26b) of the key management device 20a (20b) may be connected to the key management device 20a (20b) by PCI connection or the like, or may be connected to the key management device 20a by LAN connection or the like.

The quantum cryptographic communication system according to the first arrangement has the following three characteristics.

The first characteristic is that random numbers for application keys are generated in the HSM. The second characteristic is that, at the inter-site transmission of the application key, encryption for the inter-site transmission is performed in the HSM in addition to OTP encryption in the relay unit. The third characteristic is that, at the transfer of the application key to the cryptographic application execution device 50a (50b), encryption for the application is performed in the HSM.

The effect of the first characteristic is described below. In the conventional cases, the application key in the plaintext state is placed in a volatile memory immediately after the random number for the application key is generated. On the other hand, in the quantum cryptographic communication system 100 according to the first arrangement, the random number for the application key is generated in the HSM. Accordingly, the application key in the plaintext state exists in the HSM and is therefore protected by the HSM.

The effect of the second characteristic is described below. In the conventional cases, the application key is in the plaintext state just before OTP-encrypted communication is performed in the relay unit 224a (see FIG. 2). On the other hand, in the quantum cryptographic communication system 100 according to the first arrangement, the first encryption unit 28a performs encryption for inter-site transmission in the HSM 26a. This structure can prevent the application key from being in the plaintext state even just before the OTP-encrypted communication is performed.

The effect of the third characteristic is described below. In the conventional cases, the application key is in the plaintext state just before cryptographic communication is performed in the supply unit 41a. On the other hand, in the quantum cryptographic communication system 100 according to the first arrangement, the third encryption unit 32a performs the encryption for transmission for the application in the HSM. This structure can prevent the application key from being in the plaintext state even just before the cryptographic communication is performed.

A process of the inter-site transmission of the application keys in the first arrangement is described. When the initial setting of the quantum cryptographic communication system 100 is performed in the transmission of the application key between the sites, the inter-site encryption key (that is, a common key whose encryption key and decryption key are the same) is shared in advance between the HSM 26a and the HSM 26b before the transmission.

After the key sharing, the first encryption unit 28a performs encryption with the inter-site encryption key on the application key generated by the generation unit 27a, and transfers the encrypted application key to the relay unit 24a. The relay unit 24a further performs the OTP encryption process using the quantum encryption key in the quantum encryption key DB 25a, and transfers the double-encrypted application key to the key management device 20b at the site B.

The relay unit 24b of the key management device 20b having received the double-encrypted application key performs the decryption process for the OTP-encrypted communication and transfers the encrypted application key to the HSM 26b. In the HSM 26b, the first decryption unit 28b performs decryption for inter-site transmission using the inter-site encryption key to obtain the application key. Next, the second encryption unit 29b encrypts the application key using the DB protection encryption key, and stores the application key in the encrypted state for DB protection in the encrypted application key DB 30b. The process of the inter-site transmission of the application keys is performed in the aforementioned manner in the first arrangement.

Next, a process to be performed in cooperation by the key management device 20a and the cryptographic application execution device 50a in the first arrangement is described.

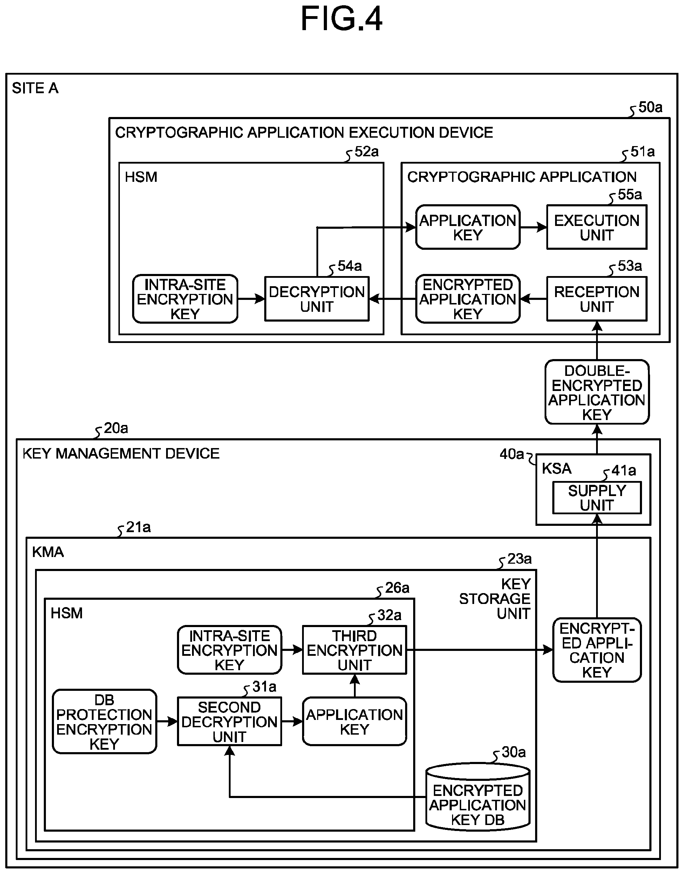

FIG. 4 is a diagram for describing a process example by the key management device 20a and the cryptographic application execution device 50a in the first arrangement. The cryptographic application execution device 50a includes a cryptographic application 51a and an HSM 52a. The cryptographic application 51a includes a reception unit 53a and an execution unit 55a. The HSM 52a includes a decryption unit 54a.

First, when the initial setting of the quantum cryptographic communication system 100 is performed, the intra-site encryption key (that is, a common key whose encryption key and decryption key are the same) is shared between the HSM 26a and the HSM 52a.

After the key sharing, the key management device 20a having received a request for the application key from the cryptographic application execution device 50a transmits the application key to the cryptographic application execution device 50a. First, in the HSM 26a, the second decryption unit 31a reads out the encrypted application key stored in the encrypted application key DB 30a and decrypts the encrypted application key with the DB protection encryption key (that is, the common key whose encryption key and decryption key are the same) to obtain the application key. The third encryption unit 32a performs encryption for transmission on the application key using the intra-site encryption key to generate the encrypted application key. The supply unit 41a then performs further cryptographic communication on the encrypted application key and transmits the double-encrypted application key to the cryptographic application execution device 50a.

On the cryptographic application execution device 50a side, the reception unit 53a performs the decryption process for the cryptographic communication on the double-encrypted application key to obtain the encrypted application key, and transmits the encrypted application key to the HSM 52a. Then, in the HSM 52a, the decryption unit 54a performs the decryption process using the intra-site encryption key (that is, the common key whose encryption key and decryption key are the same) to obtain the application key, and transmits the application key to the cryptographic application 51a. Then, in the cryptographic application 51a, the execution unit 55a executes the application process while performing encryption with the application key.

The above operation is similarly performed at the site B.

Note that, for example, the Diffie-Hellman (DH) or Rivest-Shamir-Adleman (RSA) method is used for key sharing of the inter-site encryption keys between the HSM 26a and the HSM 26b. The key sharing method for the intra-site encryption key (A) between the HSM 26a and the HSM 52a, and the key sharing method for the intra-site encryption key between the HSM 26b of the key management device 20b at the site B and the HSM of the cryptographic application execution device 50b at the site B are also similar to the key sharing method for the inter-site encryption key.

The double-encrypted application key is the application key that is encrypted twice by encryption by the third encryption unit 32a and by encryption by the supply unit 41a. Since the application key is already encrypted just before entering the supply unit 41a, if the encryption process of the application key burdens the supply unit 41a, encryption of the application key in the supply unit 41a may be omitted.

Example of application key transmission process between sites

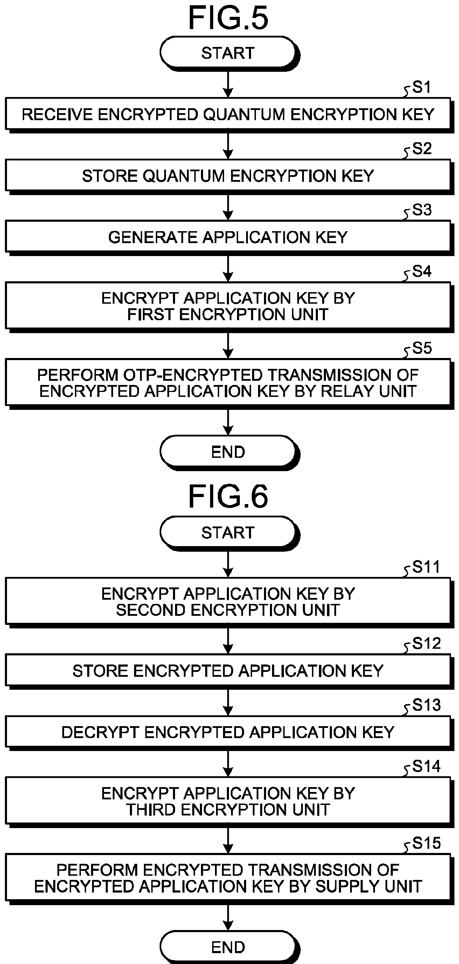

FIG. 5 is a flowchart expressing an example of the application key transmission process between the sites in the first arrangement. First, the reception unit 22a receives the encrypted quantum encryption key encrypted by http or other cryptographic communication from the QKD device 10a (step S1). Next, the reception unit 22a stores the quantum encryption key received by the process at step S1 in the quantum encryption key DB 25a (step S2). Then, the generation unit 27a generates the application key on the basis of random numbers (step S3). Subsequently, the first encryption unit 28a encrypts the application key using the inter-site encryption key (step S4). Next, the relay unit 24a further OTP-encrypts the encrypted application key that is encrypted by the process at step S4 with the quantum encryption key in the quantum encryption key DB 25a, and transmits the double-encrypted application key to the site B (step S5).

### Example of application key supply process in site

FIG. 6 is a flowchart expressing an example of the application key supply process in the site in the first arrangement. First, the second encryption unit 29a encrypts the application key generated by the generation unit 27a, using the DB protection encryption key (step S11) and stores the encrypted application key in the encrypted application key DB 30a (step S12). Next, the second decryption unit 31a decrypts the encrypted application key in the encrypted application key DB 30a using the DB protection encryption key as the decryption key (step S13). Subsequently, the third encryption unit 32a encrypts the application key using the intra-site encryption key (step S14). Next, the supply unit 41a transmits the double-encrypted application key to the cryptographic application execution device 50a by encrypted transmission of the encrypted application key via http or other cryptographic communication (step S15).

As described above, in the quantum cryptographic communication system 100 in the first arrangement, the key management device 20a (first key management device) includes a reception unit 22a that receives the quantum encryption key from the QKD device 10a (first QKD device) and the HSM 26a (first HSM). The HSM 26a includes a storage unit that stores the inter-site encryption key (first encryption key) therein, the generation unit 27a that generates the application key used in the encryption process by the cryptographic application 51a, and the first encryption unit 28a that encrypts the application key transmitted to the key management device 20b (second key management device) connected to the QKD device 10b (second QKD device) with the inter-site encryption key.

This allows the quantum cryptographic communication system 100 in the first arrangement to protect the application key used for the encryption process in a more secured manner.

### Second arrangement

A second arrangement is described next. In the description of the second arrangement, description similar to that of the first arrangement will be omitted and the parts that differ from the first arrangement will be described.

### Example of functional structure

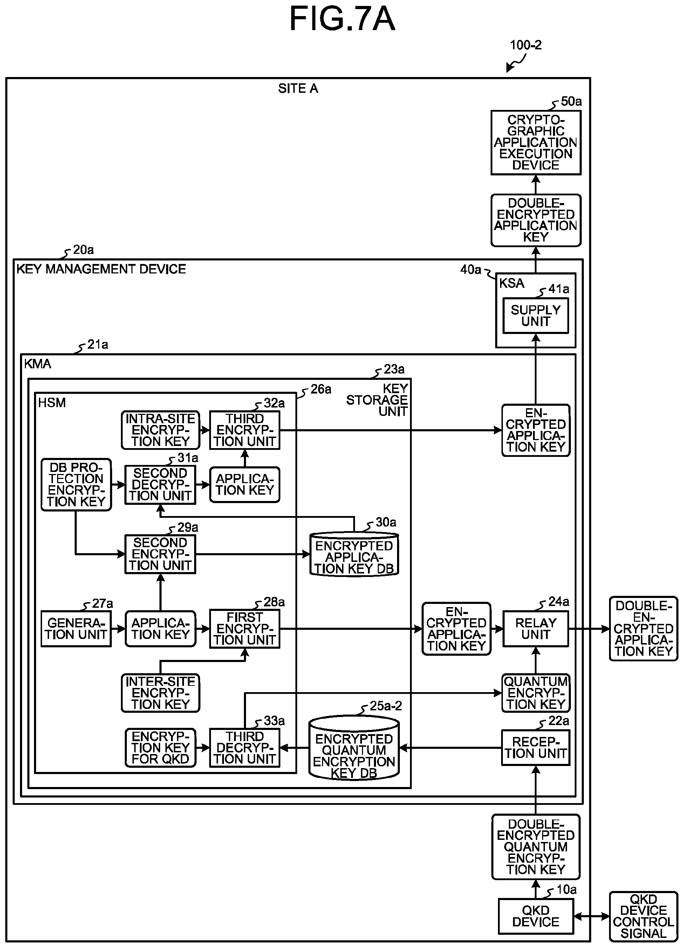

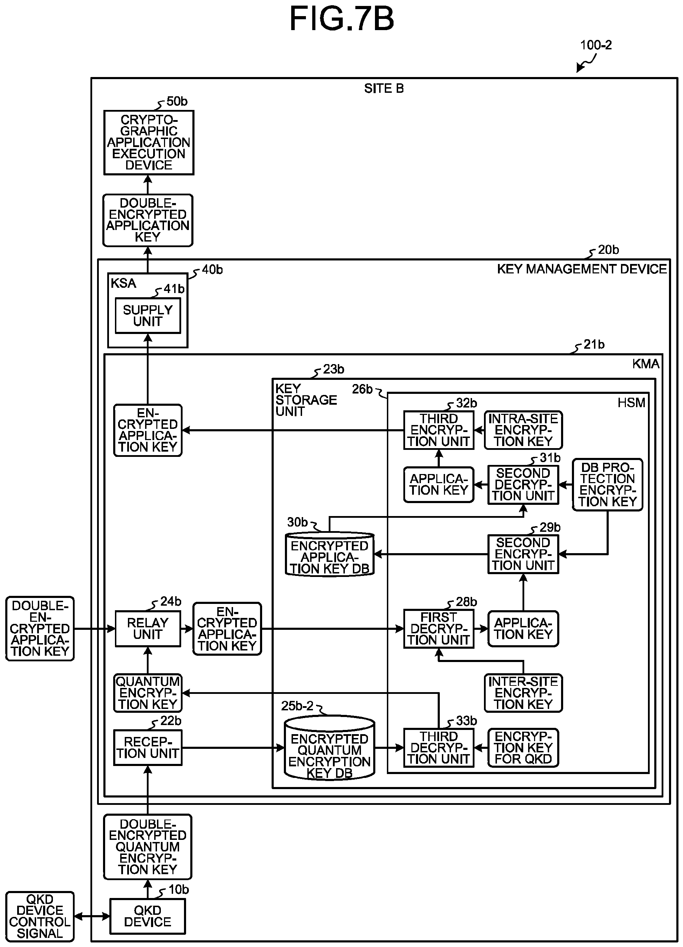

FIG. 7A and FIG. 7B are diagrams each illustrating an example of a functional structure of a quantum cryptographic communication system 100-2 according to the second arrangement. The difference from the first arrangement is that the QKD device 10a (10b) transfers the quantum encryption key in the double-encrypted state to the key management device 20a (20b).

Before the actual operation, the encryption key for QKD is stored in advance in the HSM 26a at the site A. Then, after the encryption key for QKD is shared between the key management device 20a and the QKD device 10a, encryption using the encryption key for QKD is performed on the quantum encryption key. This enables more secured transmission of quantum encryption keys between the QKD device 10a and the key management device 20a. The operation similar to that at the site A is carried out at the site B to perform the encrypted transmission of the quantum encryption key between the QKD device 10b and the key management device 20b.

Accordingly, the quantum encryption keys in the plaintext state do not exist in the key management device 20a or 20b, and in particular, when the quantum encryption keys are accumulated in the key management devices 20a and 20b (quantized encryption key DB 25a-2 (25b-2)), security will be further enhanced.

Next, the operation of transferring the quantum encryption key from the QKD device 10a to the key management device 20a and the operation of receiving the quantum encryption key by the relay unit 24a in the key management device 20a in the second arrangement are described.

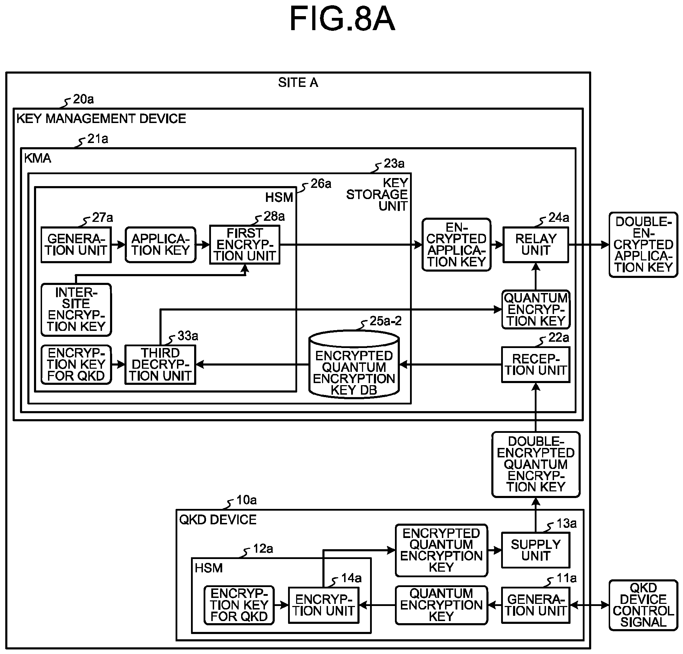

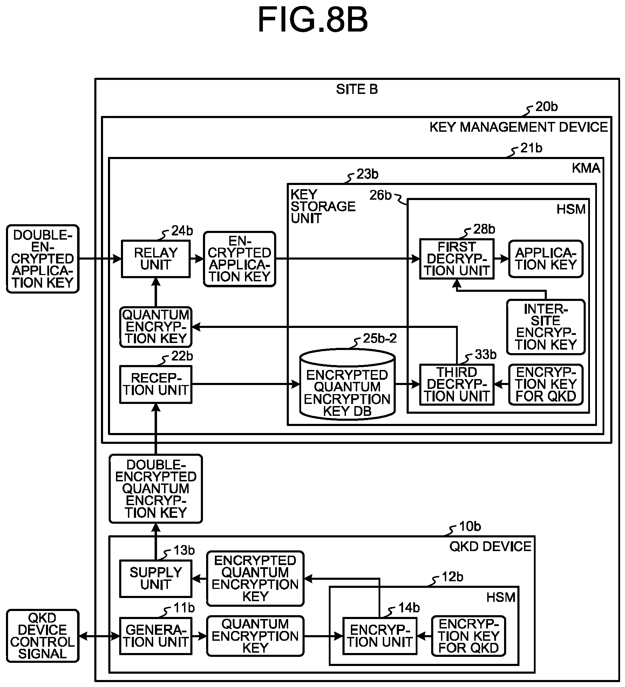

FIG. 8A and FIG. 8B are diagrams for describing process examples by the QKD device 10a (10b) and the key management device 20a (20b) in the second arrangement.

In the second arrangement, the QKD device 10a also includes an HSM 12a. Before transmitting the quantum encryption key, the key management device 20a transfers the encryption key for QKD created by the HSM 26a to the HSM 12a and the encryption key is shared between the HSM 26a and the HSM 12a as an initial setting.

In the QKD device 10a, a generation unit 11a generates the quantum encryption key in conjunction with a generation unit 11b. Then, the generation unit 11a transfers the quantum encryption key to the HSM 12a, and an encryption unit 14a encrypts the quantum encryption key using the encryption key for QKD to generate the encrypted quantum encryption key. A supply unit 13a then performs further cryptographic communication on the encrypted quantum encryption key and transfers the double-encrypted quantum encryption key to the key management device 20a.

In the key management device 20a, the reception unit 22a having received the double-encrypted quantum encryption key cancels the encryption applied by the cryptographic communication, and stores the encrypted quantum encryption key in the encrypted quantum encryption key DB 25a-2. Then, in the HSM 26a, a third decryption unit 33a decrypts the encrypted quantum encryption key using the encryption key for QKD (that is, the common key whose encryption key and decryption key are the same) to generate the quantum encryption key. The relay unit 24a then receives the quantum encryption key from the third decryption unit 33a.

The subsequent operation is similar to that in the first arrangement. The operation between the QKD device 10b and the key management device 20b at the site B is also similar to that at the site A.

The method of sharing the encryption key for QKD between the HSM 12a and the HSM 26a is, for example, the DH method or the RSA method.

The double-encrypted quantum encryption key is in a state in which encryption is applied twice: by encryption by the encryption unit 14a and by encryption by the supply unit 13a. If further encrypting the encrypted quantum encryption key heavily burdens the supply unit 13a, the encryption in the supply unit 13a may be omitted because the quantum encryption key is already in the encrypted state.

Example of application key transmission process between sites

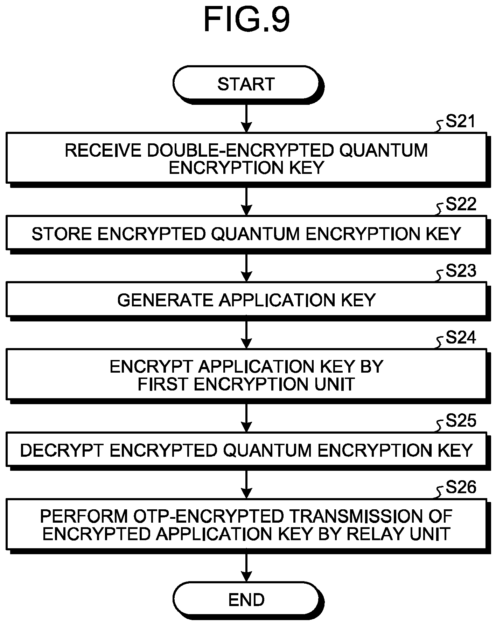

FIG. 9 is a flowchart expressing an example of the application key transmission process between sites in the second arrangement. First, the reception unit 22a receives from the QKD device 10a a double-encrypted quantum encryption key, that is, the encrypted quantum encryption key that is further encrypted by http or other cryptographic communication (step S21). Next, the reception unit 22a stores the encrypted quantum encryption key received by the cryptographic communication at step S21 in the encrypted quantum encryption key DB 25a-2 (step S22).

Next, the generation unit 27a generates the application key on the basis of random numbers (step S23). Subsequently, the first encryption unit 28a encrypts the application key using the inter-site encryption key (step S24). After that, the third decryption unit 33a decrypts the encrypted quantum encryption key using the encryption key for QKD (step S25). Next, the relay unit 24a further OTP-encrypts the encrypted application key encrypted by the process at step S24 with the quantum encryption key decrypted by the process at step S25, and transmits the double-encrypted application key to the site B (step S26).

### Third arrangement

Next, a third arrangement will be described. In the description of the third arrangement, description similar to that of the first arrangement will be omitted and the parts that differ from the first arrangement will be described.

### Example of functional structure

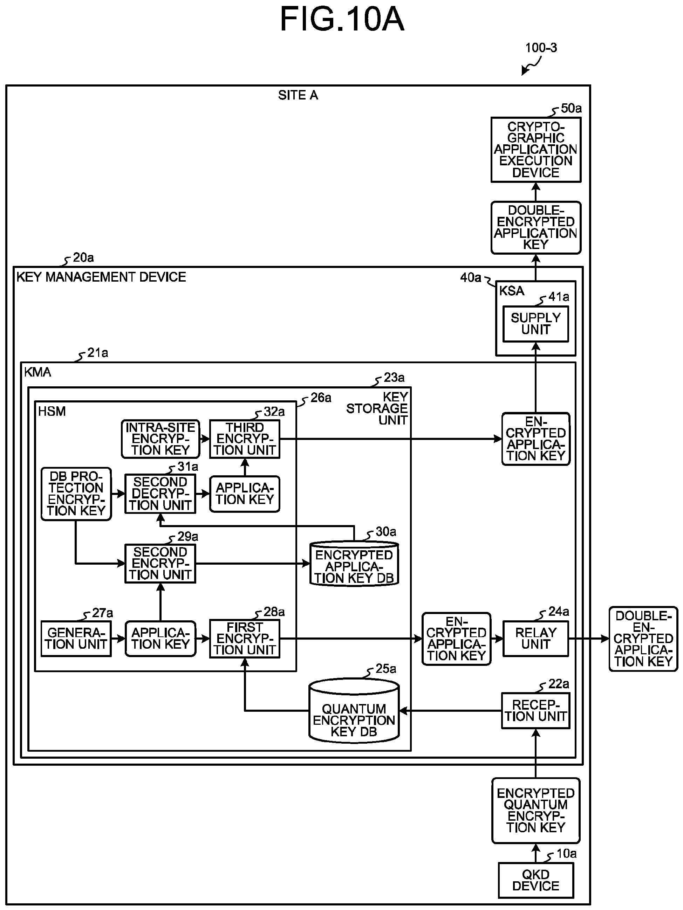

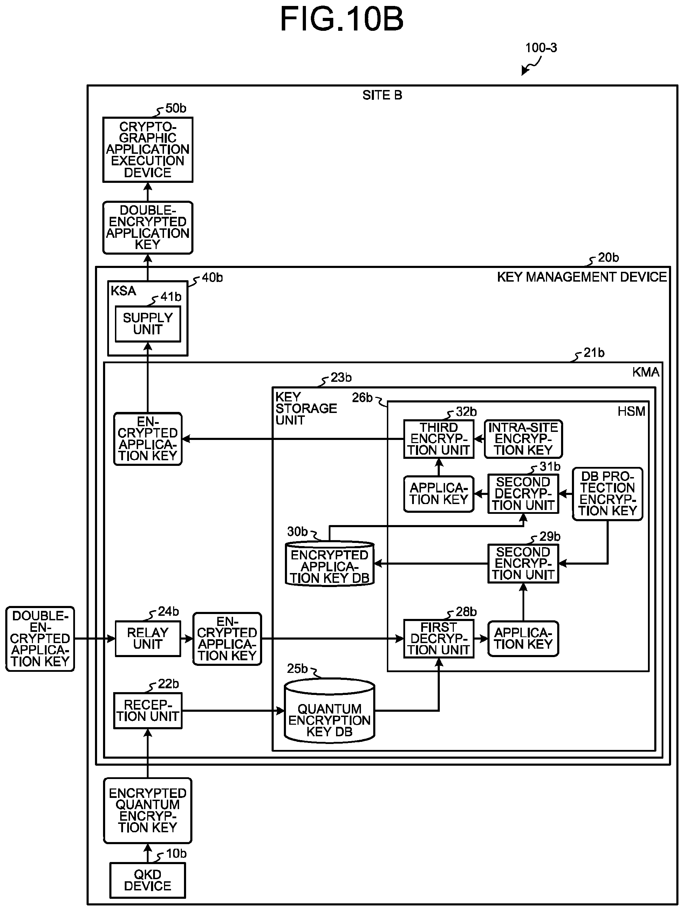

FIG. 10A and FIG. 10B are diagrams each illustrating an example of a functional structure of a quantum cryptographic communication system 100-3 according to the third arrangement. The difference from the first arrangement is that OTP encryption, which is performed in the relay unit 24a in the first arrangement, is performed in the HSM 26a. Accordingly, the OTP encryption can be performed in the more secured manner in terms of information security.

The transmission process for the application key in the third arrangement is described. At the site A, first, the generation unit 27a generates the application key. Next, the first encryption unit 28a performs the OTP encryption on the application key using the quantum encryption key in the quantum encryption key DB 25a to generate an encrypted application key. Then, the relay unit 24a further encrypts the application key by cryptographic communication and transfers the double-encrypted application key to the site B.

At the site B, first, the relay unit 24b transfers the encrypted application key obtained by the decryption process for the cryptographic communication of the double-encrypted application key to the HSM 26b. In the HSM 26b, the first decryption unit 28b decrypts the encrypted application key using the quantum encryption key in the quantum encryption key DB 25b to obtain the application key. Since the subsequent operation is similar to that in the first arrangement, the description is omitted.

The double-encrypted application key is in the state of being encrypted twice: by OTP encryption by the first encryption unit 28a and by encryption in the relay unit 24a. Before entering the relay unit 24a, the application key is protected by OTP encryption; therefore, if the processing load for encryption of the application key is high in the relay unit 24a, encryption of the application key in the relay unit 24a may be omitted.

Example of application key transmission process between sites

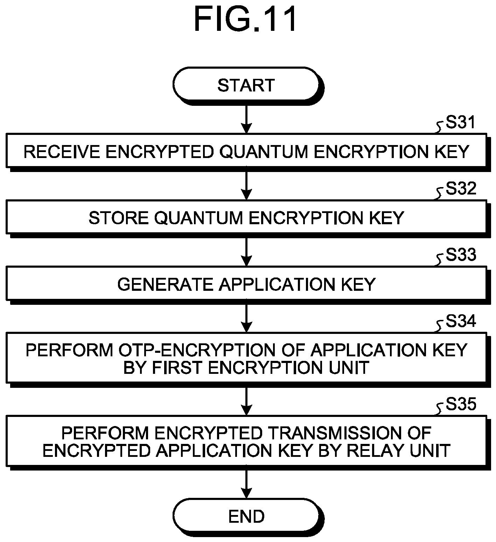

FIG. 11 is a flowchart expressing an example of an application key transmission process between sites in the third arrangement. First, the reception unit 22a receives from the QKD device 10a the encrypted quantum encryption key encrypted by http or other cryptographic communication (step S31). Next, the reception unit 22a stores the quantum encryption key received by the process at step S31 in the quantum encryption key DB 25a (step S32).

Next, the generation unit 27a generates the application key on the basis of random numbers (step S33). After that, the first encryption unit 28a OTP-encrypts the application key using the quantum encryption key (step S34). Subsequently, the relay unit 24a further encrypts the encrypted application key, which has been OTP-encrypted in the process at step S34, using http or other cryptographic communication, and transmits the double-encrypted application key to the site B (step S35).

### Fourth arrangement

Next, a fourth arrangement is described. The fourth arrangement is a combination of the first to the third arrangements.

### Example of functional structure

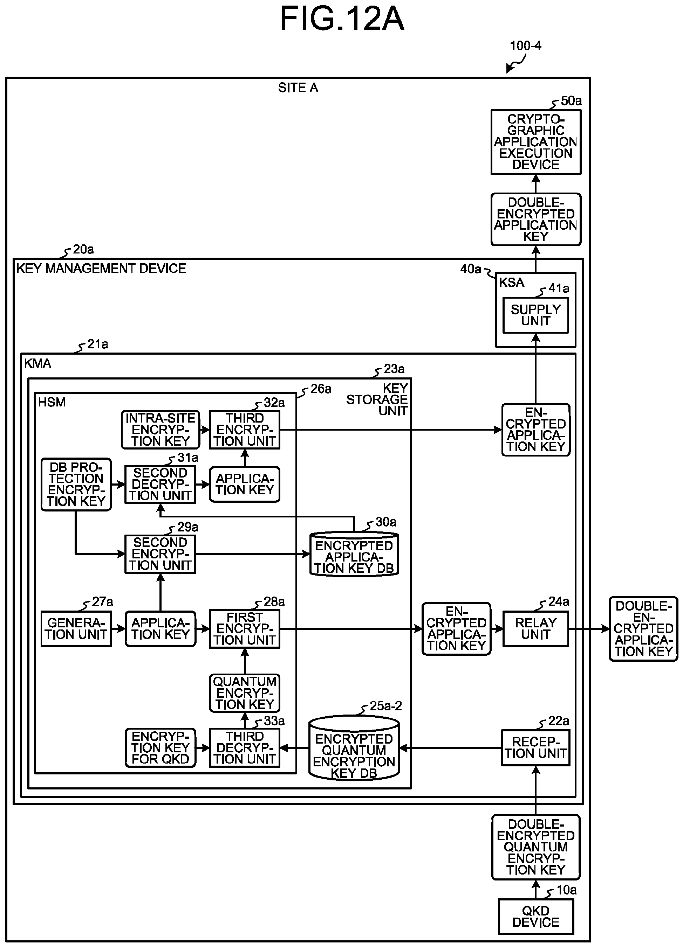

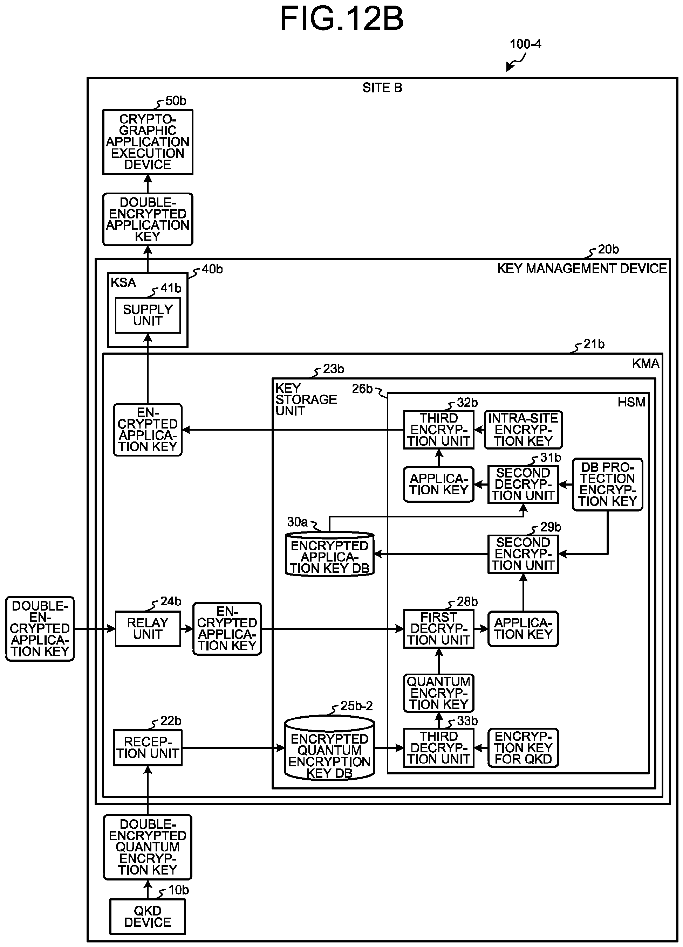

FIG. 12A and FIG. 12B are diagrams each illustrating an example of a functional structure of a quantum cryptographic communication system 100-4 according to the fourth arrangement. In the fourth arrangement, the quantum encryption key in the plaintext state and the application key in the plaintext state exist in the HSM 26a (26b) in the key management device 20a (20b), and the management of each key in the key management device 20a (20b) is further enhanced in terms of security. In other words, the fourth arrangement has all the effects of the first to the third arrangements.

Example of application key transmission process between sites

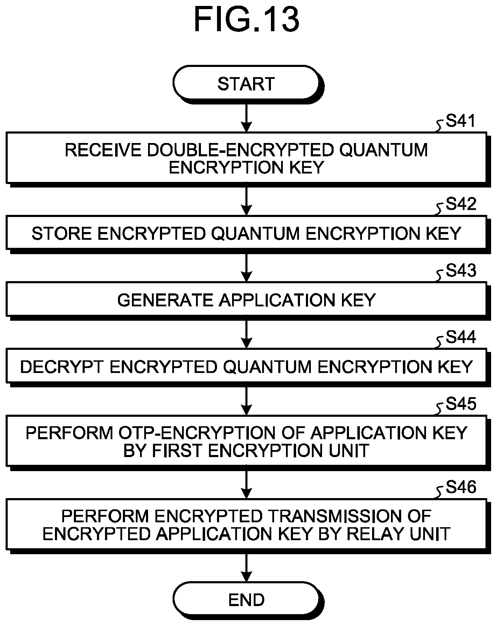

FIG. 13 is a flowchart expressing an example of the application key transmission process between the sites in the fourth arrangement. First, the reception unit 22a receives from the QKD device 10a a double-encrypted quantum encryption key, that is, the encrypted quantum encryption key that is further encrypted by http or other cryptographic communication (step S41). Next, the reception unit 22a stores the encrypted quantum encryption key received by the cryptographic communication at step S21 in the encrypted quantum encryption key DB 25a-2 (step S42).

Next, the generation unit 27a generates the application key on the basis of random numbers (step S43). After that, the third decryption unit 33a decrypts the encrypted quantum encryption key using the encryption key for QKD (step S44). After that, the first encryption unit 28a OTP-encrypts the application key using the quantum encryption key (step S45). Next, the relay unit 24a further encrypts the encrypted application key, which has been OTP-encrypted in the process at step S45, using http or other cryptographic communication, and transmits the double-encrypted application key to the site B (step S46).

### Fifth arrangement

Next, a fifth arrangement is described. In the description of the fifth arrangement, description similar to that of the fourth arrangement will be omitted and the parts that differ from the fourth arrangement will be described.

### Example of functional structure

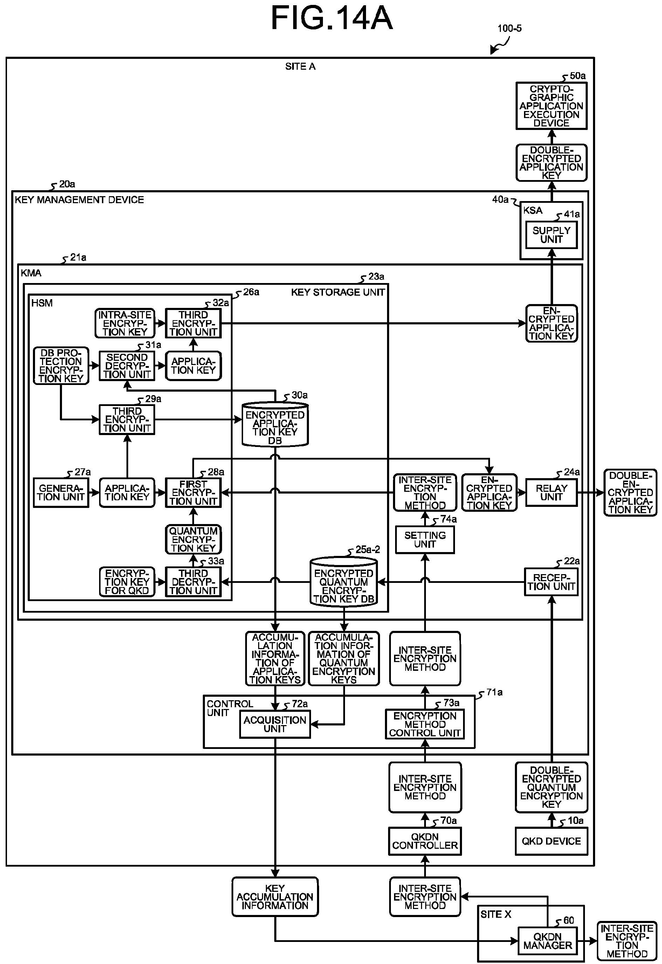

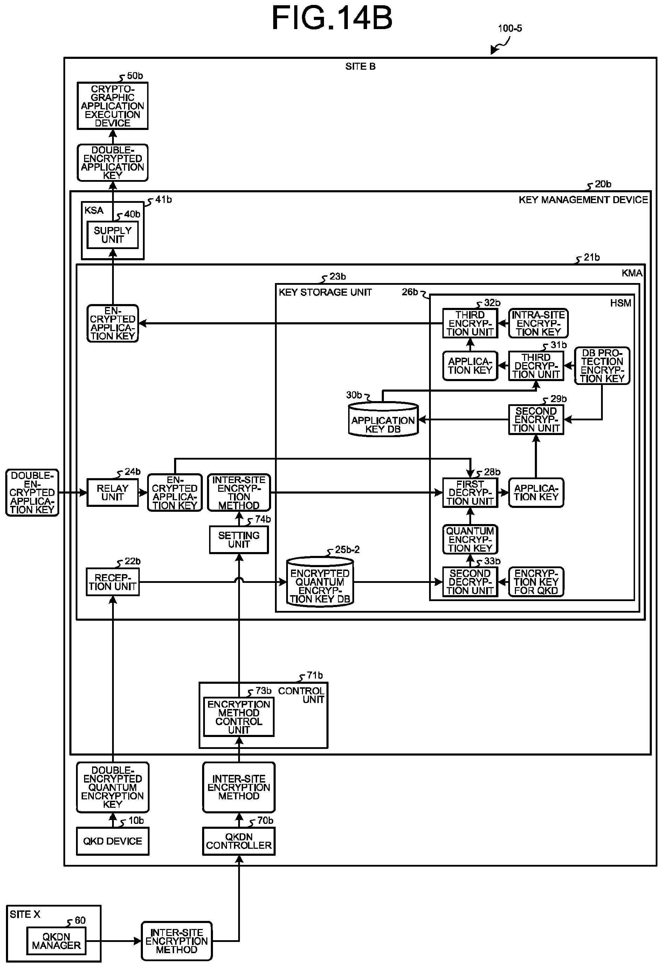

FIG. 14A and FIG. 14B are diagrams each illustrating an example of a functional structure of a quantum cryptographic communication system 100-5 according to the fifth arrangement. The main difference from the fourth arrangement is that the inter-site encryption method using the quantum encryption key for the inter-site transfer of the application key, which is performed within the HSM 26a (26b) in the fourth arrangement, is made variable in the fifth arrangement. In the case of the fourth arrangement, the inter-site encryption method using the quantum encryption key is fixed to the OTP encryption method, but in the fifth arrangement, the encryption method is changed according to the accumulation information of the application keys and the accumulation information of the quantum encryption keys. Candidates for the encryption methods include, for example, OTP and AES.

A switching process for the inter-site encryption method, which is the main characteristic of the fifth arrangement, is described below. First, an acquisition unit 72a acquires the accumulation information of the application keys from the encrypted application key DB 30a and the accumulation information of the quantum encryption keys from the encrypted quantum encryption key DB 25a-2. The accumulation information of the application keys indicates, for example, the accumulation quantity of the application keys in the encrypted application key DB 30a. The accumulation information of the quantum encryption keys indicates the accumulation quantity of the quantum encryption keys in the encrypted quantum encryption key DB 25a-2, for example.

Next, the acquisition unit 72a transmits the key accumulation information (accumulation information of application keys and accumulation information of quantum encryption keys) to a QKDN manager 60 at a site X. The QKDN manager 60 determines the inter-site encryption method using the quantum encryption key on the basis of at least one of the accumulation information of the application keys and the accumulation information of the quantum encryption keys, and transmits the inter-site encryption method using the quantum encryption key to a QKDN controller 70a at the site A and a QKDN controller 70b at the site B.

The QKDN controller 70a (70b) then notifies an encryption method control unit 73a (73b) of the inter-site encryption method. The encryption method control unit 73a (73b) notifies a setting unit 74a (74b) in the KMA 21a (21b). Finally, the setting unit 74a at the site A sets the inter-site encryption method of the first encryption unit 28a to be performed in the HSM 26a, and the setting unit 74b at the site B sets the inter-site encryption method to be decrypted by the first decryption unit 28b in the HSM 26b. The switching process for the inter-site encryption method has been described.

Next, a method of switching (a method of determining) the inter-site encryption method to be performed by the QKDN manager 60 is described. First, the candidates of the encryption method are described. As mentioned above, OTP and AES are possible candidates for the encryption method. In the case of OTP, the quantum encryption keys are consumed at a rate equivalent to the rate of generating the application keys (rate of generating random numbers) in the generation unit 27a. On the other hand, in the case of AES, the consumption rate of the quantum encryption keys is kept significantly low compared to OTP; for example, if the encryption key for AES is switched every minute in AES 256 bits, only 256 bits of quantum encryption keys are consumed per minute.

Next, specific examples of the switching method to be performed by the QKDN manager 60 are described.

In a first method, a threshold QA is prepared as a threshold for the accumulation quantity of the quantum encryption keys. Then, the QKDN manager 60 determines the encryption method of the encryption process using the quantum encryption keys to be a first encryption method when the accumulation quantity of the quantum encryption keys is less than or equal to the threshold QA, and determines the encryption method of the encryption process using the quantum encryption key to be a second encryption method in which a consumption rate of the quantum encryption keys is higher than in the first encryption method when the accumulation quantity of the quantum encryption keys is more than the threshold QA. For example, the QKDN manager 60 sets the inter-site encryption method to AES when the accumulation quantity of the quantum encryption keys is less than or equal to the threshold QA, and sets the inter-site encryption method to OTP when the accumulation quantity of the quantum encryption keys is more than the threshold QA.

A second method is described below. In the second method, thresholds QA and QB are prepared as thresholds for the accumulation quantity of the quantum encryption keys. Then, the QKDN manager 60 determines the encryption method of the encryption process using the quantum encryption key to be the first encryption method when the accumulation quantity of the quantum encryption keys is less than or equal to the threshold QA, determines the encryption method of the encryption process using the quantum encryption key to be the second encryption method in which the consumption rate of the quantum encryption keys is higher than in the first encryption method when the accumulation quantity of the quantum encryption keys subsequently becomes more than the threshold QB (QB > QA), and causes the encryption method of the encryption process using the quantum encryption key to be the second encryption method until the accumulation quantity of the quantum encryption keys becomes less than or equal to the threshold QA again. For example, the QKDN manager 60 sets the inter-site encryption method to AES when the accumulation quantity of the quantum encryption keys is less than or equal to the threshold QA, and sets the inter-site encryption method to OTP when the accumulation quantity of the quantum encryption keys subsequently becomes more than the threshold QB. The QKDN manager 60 causes the inter-site encryption method to be OTP until the accumulation quantity of the quantum encryption keys becomes less than or equal to the threshold QA again. As a matter of course, in the second method, the threshold QB needs to be greater than the threshold QA.

A third method is described below. In the third method, a threshold GA is prepared as a threshold for the accumulation quantity of the application keys. Then, the QKDN manager 60 determines the encryption method of the encryption process using the quantum encryption key to be the first encryption method when the accumulation quantity of the application keys is less than or equal to the threshold GA, and determines the encryption method of the encryption process using the quantum encryption key to be the second encryption method in which the consumption rate of the quantum encryption keys is higher than in the first encryption method when the accumulation quantity of the application keys is more than the threshold GA. For example, the QKDN manager 60 sets the inter-site encryption method to AES when the accumulation quantity of the application keys is less than or equal to the threshold GA, and sets the inter-site encryption method to OTP when the accumulation quantity of the application keys becomes more than the threshold GA.

A fourth method is described below. In the fourth method, thresholds GA and GB are prepared as thresholds for the accumulation quantity of the application keys. Then, the QKDN manager 60 determines the encryption method of the encryption process using the quantum encryption key to be the first encryption method when the accumulation quantity of the application keys is less than or equal to the threshold GA, determines the encryption method of the encryption process using the quantum encryption key to be the second encryption method in which the consumption rate of the quantum encryption keys is higher than in the first encryption method when the accumulation quantity of the application keys subsequently becomes more than the threshold GB (GB > GA), and causes the encryption method of the encryption process using the quantum encryption key to be the second encryption method until the accumulation quantity of the application keys becomes less than or equal to the threshold GA again. For example, the QKDN manager 60 sets the inter-site encryption method to AES when the accumulation quantity of the application keys is less than or equal to the threshold GA, and sets the inter-site encryption method to OTP when the accumulation quantity of the application keys subsequently becomes more than the threshold GB. The QKDN manager 60 causes the inter-site encryption method to be OTP until the accumulation quantity of the application keys becomes less than or equal to the threshold GA again. As a matter of course, in the fourth method, the threshold GB needs to be greater than the threshold GA.

A fifth method is described below. The fifth method is a switching method that combines the first method and the third method, and prepares the threshold QA for the accumulation quantity of the quantum encryption keys and the threshold GA for the accumulation quantity of the application keys. The QKDN manager 60 determines the encryption method of the encryption process using the quantum encryption key to be the first encryption method when the accumulation quantity of the quantum encryption keys is less than or equal to the threshold QA and the accumulation quantity of the application keys is less than or equal to the threshold GA, and determines the encryption method of the encryption process using the quantum encryption key to be the second encryption method in which the consumption rate of the quantum encryption keys is higher than in the first encryption method when the accumulation quantity of the quantum encryption keys is more than the threshold QA or the accumulation quantity of the application keys is more than the threshold GA. For example, the QKDN manager 60 sets the inter-site encryption method to AES when the accumulation quantity of the quantum encryption keys is less than or equal to the threshold QA and the accumulation quantity of the application keys is less than or equal to the threshold GA, and sets the inter-site encryption method to OTP in the other cases.

A sixth method is described below. The sixth method is a switching method that combines the second method and the fourth method, and prepares the thresholds QA and QB for the accumulation quantity of the quantum encryption keys and the thresholds GA and GB for the accumulation quantity of the application keys. The QKDN manager 60 determines the encryption method of the encryption process using the quantum encryption key to be the first encryption method when the accumulation quantity of the quantum encryption keys is less than or equal to the threshold QA and the accumulation quantity of the application keys is less than or equal to the threshold GA, determines the encryption method of the encryption process using the quantum encryption key to be the second encryption method in which the consumption rate of the quantum encryption keys is higher than in the first encryption method when the accumulation quantity of the quantum encryption keys is more than the threshold QB (QB > QA) and the accumulation quantity of the application keys is more than the threshold GB (GB > GA), and causes the encryption method of the encryption process using the quantum encryption key to be the second encryption method until the accumulation quantity of the quantum encryption keys becomes less than or equal to the threshold QA and the accumulation quantity of the application keys becomes less than or equal to GA again. For example, the QKDN manager 60 sets the inter-site encryption method to AES when the accumulation quantity of the quantum encryption keys is less than or equal to the threshold QA and the accumulation quantity of the application keys is less than or equal to the threshold GA, and changes the inter-site encryption method to OTP when the accumulation quantity of the quantum encryption keys becomes more than the threshold QB and the accumulation quantity of the application keys becomes more than the threshold GB. Then, the QKDN manager 60 causes the inter-site encryption method to be OTP until the accumulation quantity of the quantum encryption keys becomes less than or equal to the threshold QA and the accumulation quantity of the application keys becomes less than or equal to GA again. As a matter of course, in the sixth method, the threshold QB needs to be greater than the threshold QA and the threshold GB needs to be greater than the threshold GA.

Furthermore, when the inter-site encryption method is AES, the update frequency (switching frequency) of the quantum encryption keys used for AES encryption may be adjusted. When the update frequency of the quantum encryption keys is reduced, the consumption rate of the quantum encryption keys by AES decreases, and thus the quantum encryption keys can be accumulated faster than when the update frequency of the quantum encryption keys is larger. For example, when the encryption method for the encryption process using the quantum encryption key is set to AES, the QKDN manager 60 cause the update frequency of the quantum encryption keys used for encryption with AES to be smaller as the accumulation quantity of the quantum encryption keys is smaller.

Example of switching process for inter-site encryption method

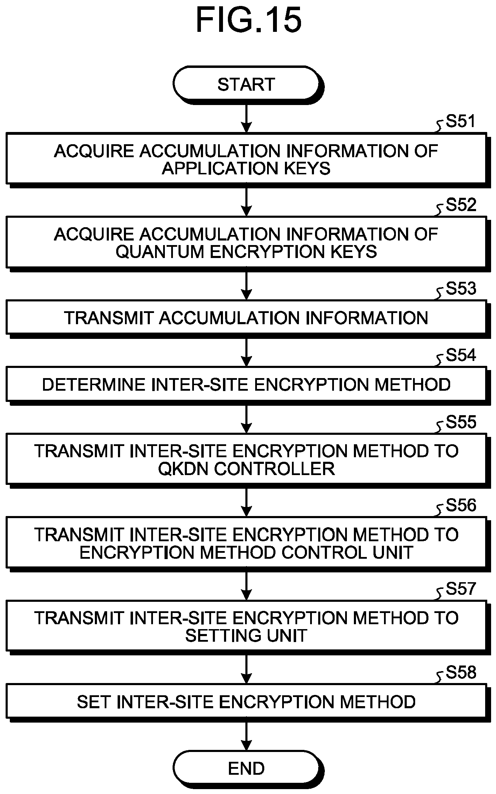

FIG. 15 is a flowchart expressing an example of a switching process for an inter-site encryption method in the fifth arrangement. First, the acquisition unit 72a acquires the accumulation information of the application keys from the encrypted application key DB 30a (step S51). Next, the acquisition unit 72a acquires the accumulation information of the quantum encryption keys from the encrypted quantum encryption key DB 25a-2 (step S52). Subsequently, the acquisition unit 72a transmits the key accumulation information (accumulation information of application keys and accumulation information of quantum encryption keys) to the QKDN manager 60 (step S53).

Next, the QKDN manager 60 determines the inter-site encryption method in the aforementioned manner on the basis of the accumulation information of the application keys and the accumulation information of the quantum encryption keys (step S54). After that, the QKDN manager 60 transmits the inter-site encryption method to the QKDN controller 70a at the site A and the QKDN controller 70b at the site B (step S55). Subsequently, the QKDN controller 70a transmits the inter-site encryption method to the encryption method control unit 73a, and the QKDN controller 70b transmits the inter-site encryption method to the encryption method control unit 73b (step S56). Then, the encryption method control unit 73a transmits the inter-site encryption method to the setting unit 74a, and the encryption method control unit 73b transmits the inter-site encryption method to the setting unit 74b (step S57). Next, the setting unit 74a at the site A sets the inter-site encryption method of the first encryption unit 28a to be performed in the HSM 26a, and the setting unit 74b at the site B sets the inter-site encryption method to be decrypted by the first decryption unit 28b of the HSM 26b (step S58).

### Modifications

In the arrangements described above, the HSM 12a is prepared for the QKD device 10a, the HSM 26a is prepared for the key management device 20a, and the HSM 52a is prepared for the cryptographic application execution device 50a. As long as no security issues arise, the QKD device 10a or the cryptographic application execution device 50a may share the HSM 26a for the key management device 20a at the site A. This similarly applies to the case at the site B.

First, an example in which the QKD device 10a shares the HSM 26a of the key management device 20a is described.

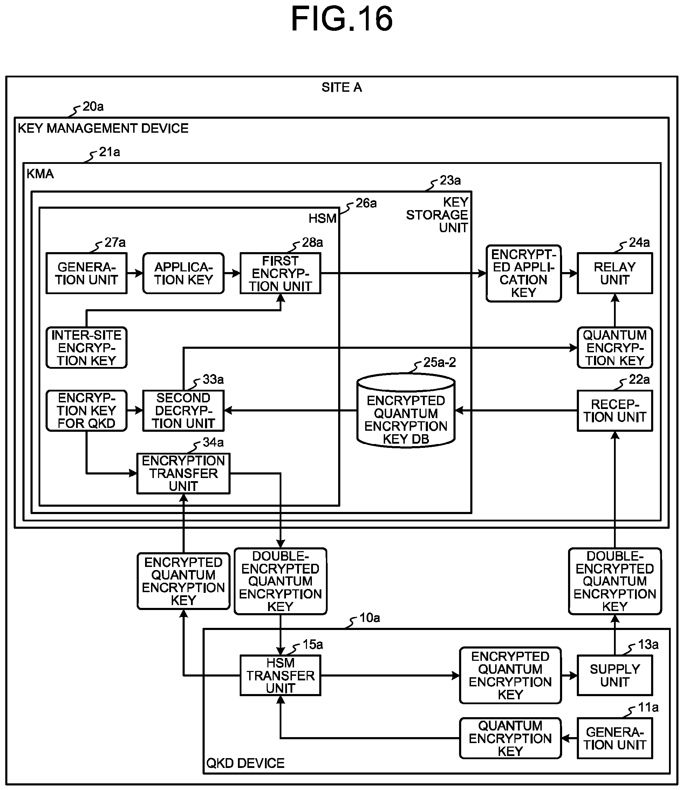

FIG. 16 is a diagram illustrating a first modification in which the HSM 26a is shared. In the example in FIG. 16, after the generation unit 11a generates the quantum encryption key, the quantum encryption key is transmitted to an HSM transfer unit 15a. The HSM transfer unit 15a transfers the encrypted quantum encryption key by cryptographic communication to the HSM 26a. In the HSM 26a, an encryption transfer unit 34a having received the encrypted quantum encryption key from the HSM transfer unit 15a decrypts the encrypted quantum encryption key. The encryption transfer unit 34a further encrypts the encrypted quantum encryption key, which is encrypted using the encryption key for QKD, into a double-encrypted quantum encryption key by cryptographic communication, and transfers the double-encrypted quantum encryption key to the QKD device 10a.

After receiving the double-encrypted quantum encryption key from the HSM 26a, the HSM transfer unit 15a performs the decryption process for the cryptographic communication to obtain the encrypted quantum encryption key. The HSM transfer unit 15a transfers the encrypted quantum encryption key to the supply unit 13a. The subsequent operation is similar to that in the case of the above-mentioned arrangement. The structure at the site B is also similar to that at the site A.

Next, an example in which the cryptographic application execution device 50a shares the HSM 26a of the key management device 20a is described.

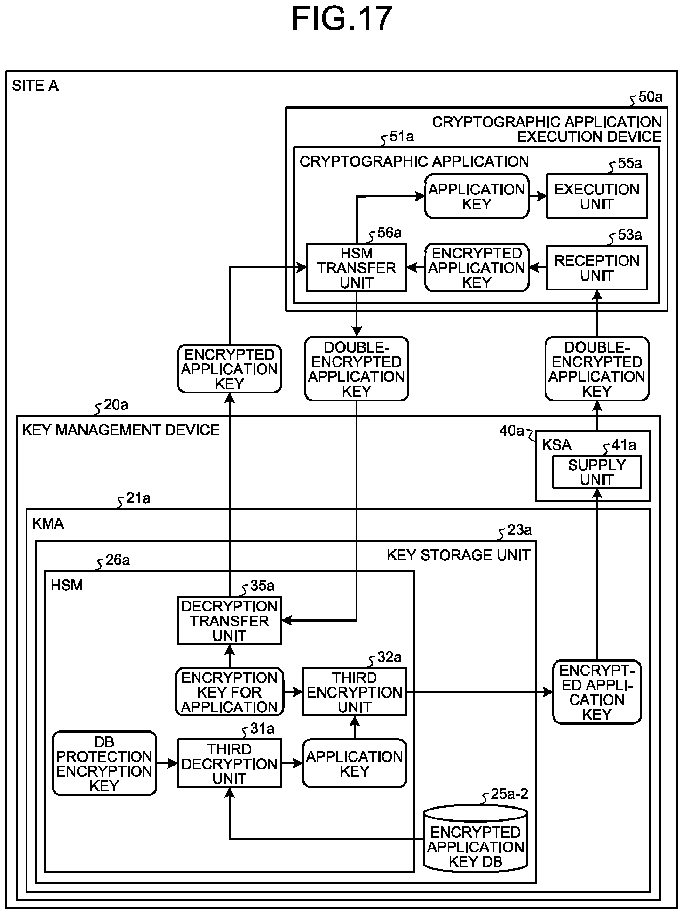

FIG. 17 is a diagram illustrating a second modification in which the HSM 26a is shared. In the example in FIG. 17, the reception unit 53a of the cryptographic application 51a having received the double-encrypted application key and performs the decryption process for the cryptographic communication to obtain the encrypted application key. The reception unit 53a transmits the encrypted application key to an HSM transfer unit 56a. The HSM transfer unit 56a further encrypts the encrypted application key by cryptographic communication and transfers the double-encrypted application key to the HSM 26a.

In the HSM 26a, a decryption transfer unit 35a encrypts the application key obtained by decryption using the encryption key for the application through cryptographic communication, and transfers the encrypted application key to the cryptographic application 51a. In the cryptographic application 51a, the HSM transfer unit 56a having received the encrypted application key from the HSM 26a performs the decryption process for the cryptographic communication to obtain the application key. The subsequent operation is similar to that in the case of the above-mentioned arrangement. The structure at the site B is also similar to that at the site A.

In the above arrangements, the encryption key for QKD is used when the quantum encryption key is transferred between the QKD device 10a (10b) and the key management device 20a (20b), and the encryption key for the application is used when the application key is transferred between the key management device 20a (20b) and the cryptographic application execution device 50a (50b). However, if the number of devices to which the keys are transferred within the site A (B) becomes significantly large and the number of encryption keys stored in the HSM 26a (26b) becomes significantly large, the encryption keys for intra-site transfer may be shared.

In the above arrangements, for example, at the site A, the intra-site encryption key is prepared and shared instead of using the encryption key for the application and the encryption key for the QKD. This similarly applies to the case at the site B.

In the first and the second arrangements, when the application keys are transferred to more sites, more keys need to be saved in the HSM 26a. If there are many types of keys saved in the HSM 26a, multiple sites may be bundled together to form a single area, and a common inter-site encryption key may be used when transferring the application keys within that area. In this case, the HSM 26a stores the inter-site encryption key corresponding to a transfer destination area. When transferring the application key from the transfer source site A to a site in a different area, the relay unit 24a performs encrypted transfer using the inter-site encryption key corresponding to the transfer destination area.

In another possible method, the inter-site encryption key corresponding to the transfer source area is stored in advance in the HSM in the transfer destination site, and then is subjected to the encryption transfer using the inter-site encryption key corresponding to the transfer source area.

In the above arrangements, the application key is generated at the site A; however, the structure at the site B in the case where the application key is generated at the site B is also similar to the structure at the site A.

Finally, an example of a hardware structure of the QKD device 10a (10b), the key management device 20a (20b), and the cryptographic application execution device 50a (50b) in the first to the fifth arrangements, and the QKDN manager 60 in the fifth arrangement is described.

### Example of hardware structure

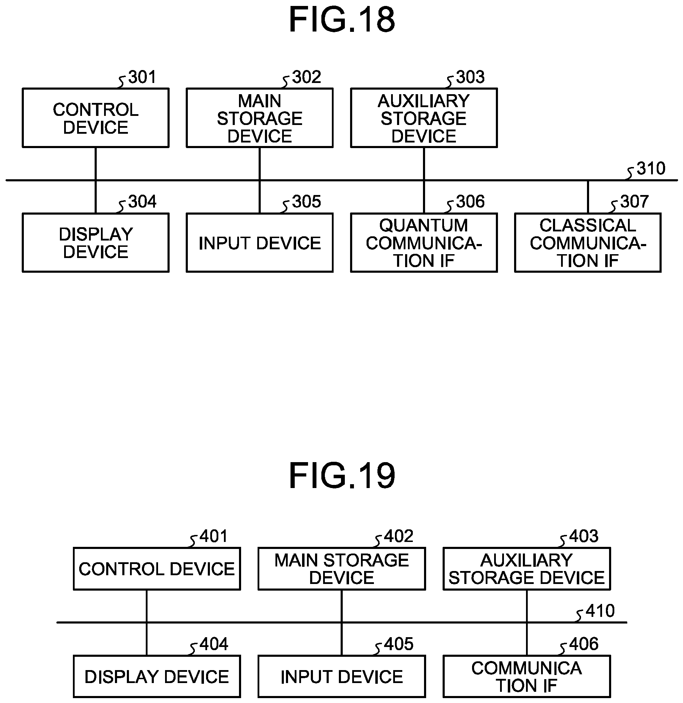

FIG. 18 is a diagram illustrating an example of the hardware structure of main parts of the QKD device 10a (10b) in the first to the fifth arrangements. The QKD device 10a (10b) in the first to the fifth arrangements includes a control device 301, a main storage device 302, an auxiliary storage device 303, a display device 304, an input device 305, a quantum communication interface (IF) 306, and a classical communication IF 307.

The control device 301, the main storage device 302, the auxiliary storage device 303, the display device 304, the input device 305, the quantum communication IF 306, and the classical communication IF 307 are connected via a bus 310.

The control device 301 executes computer programs read out from the auxiliary storage device 303 to the main storage device 302. The main storage device 302 is a memory such as a read only memory (ROM) or a random access memory (RAM). The auxiliary storage device 303 is a hard disk drive (HDD), a memory card, or the like.

The display device 304 displays the status of the QKD device 10a (10b), for example. The input device 305 receives the input from the user.

The quantum communication IF 306 is the interface for connection to the QKD link where photons are transmitted. The classical communication IF 307 is an interface for connection to a transmission line where control signals and the like are transmitted.

FIG. 19 is a diagram illustrating an example of a hardware structure of main parts of the key management device 20a (20b) and the cryptographic application execution device 50a (50b) in the first to the fifth arrangements, and the QKDN manager 60 in the fifth arrangement. The key management device 20a (20b) and the cryptographic application execution device 50a (50b) in the first to the fifth arrangements, and the QKDN manager 60 in the fifth arrangement include a control device 401, a main storage device 402, an auxiliary storage device 403, a display device 404, an input device 405, and a communication IF 406.

The control device 401, the main storage device 402, the auxiliary storage device 403, the display device 404, the input device 405, and the communication IF 406 are connected via a bus 410.

The control device 401 executes computer programs read out from the auxiliary storage device 403 to the main storage device 402. The main storage device 402 is a memory such as ROM or RAM. The auxiliary storage device 403 is an HDD, a memory card, or the like.

The display device 404 displays the status of the key management device 20a (20b), the cryptographic application execution device 50a (50b), and the QKDN manager 60, for example. The input device 405 receives the input from the user.

The communication IF 406 is an interface to connect to the transmission line.

The computer program to be executed in the QKD device 10a (10b), the key management device 20a (20b), and the cryptographic application execution device 50a (50b) in the first to the fifth arrangements, and the QKDN manager 60 in the fifth arrangement is provided as a computer program product by being stored in a computer-readable storage medium such as a CD-ROM, a memory card, a CD-R, or a digital versatile disc (DVD) in a format that can be installed on a computer or as a file in an executable format.

The computer program to be executed in the QKD device 10a (10b), the key management device 20a (20b), and the cryptographic application execution device 50a (50b) in the first to the fifth arrangements, and the QKDN manager 60 in the fifth arrangement may be provided by being stored on a computer connected to a network such as the Internet and downloaded through the network.

The computer program to be executed in the QKD device 10a (10b), the key management device 20a (20b), and the cryptographic application execution device 50a (50b) in the first to the fifth arrangements, and the QKDN manager 60 in the fifth arrangement may alternatively be provided through a network such as the Internet without downloading.

The computer program to be executed in the QKD device 10a (10b), the key management device 20a (20b), and the cryptographic application execution device 50a (50b) in the first to the fifth arrangements, and the QKDN manager 60 in the fifth arrangement may be provided by being incorporated in advance in the ROM or the like.

The computer program to be executed by the QKD device 10a (10b) has a module structure including functions that can be achieved by the computer program among the functional structures of the QKD device 10a (10b). The functions achieved by the computer program are loaded into the main storage device 302 when the control device 301 reads and executes the computer program from a storage medium such as the auxiliary storage device 303. In other words, the functions achieved by the computer programs are generated on the main storage device 302.

The computer programs to be executed by the key management device 20a (20b) and the cryptographic application execution device 50a (50b), as well as the computer programs to be executed by the QKDN manager 60 in the fifth arrangement, have a module structure including functions that can be achieved by the computer programs among the functional structures of the key management device 20a (20b) and the cryptographic application execution device 50a (50b), and the QKDN manager 60 in the fifth arrangement. The functions achieved by the computer program are loaded into the main storage device 402 when the control device 401 reads and executes the computer program from a storage medium such as the auxiliary storage device 403. In other words, the functions achieved by the computer programs are generated on the main storage device 402.

The functions of the QKD device 10a (10b), the key management device 20a (20b), the cryptographic application execution device 50a (50b), and the QKDN manager 60 may be achieved by hardware such as an integrated circuit (IC) partially or entirely. One example of the IC is a processor that performs dedicated processing.

When a plurality of processors are used to achieve each function, each processor may achieve one of the functions or two or more of the functions.

The operating form of the QKD device 10a (10b), the key management device 20a (20b), the cryptographic application execution device 50a (50b), and the QKDN manager 60 may be arbitrary. The QKD device 10a (10b), the key management device 20a (20b), the cryptographic application execution device 50a (50b), and the QKDN manager 60 may be operated as a quantum cryptographic communication system that enables cryptographic communication in a cloud system on the network, for example.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A quantum cryptographic communication system includes a first quantum key distribution (QKD) device, and a first key management device. The first QKD device that shares a quantum encryption key with a second QKD device through QKD. The first key management device includes a reception unit and a first hardware security module (HSM). The reception unit receives the quantum encryption key from the first QKD device. The first HSM includes a storage unit, a generation unit, and a first encryption unit. The storage unit stores a first encryption key therein. The generation unit generates an application key used in an encryption process by a cryptographic application. The first encryption unit that encrypts, with the first encryption key, the application key transmitted to a second key management device connected to the second QKD device.

Example 2. In the quantum cryptographic communication system according to Example 1,the first HSM shares the first encryption key with a second HSM of the second key management device when initial setting of the quantum cryptographic communication system is performed.

Example 3. In the quantum cryptographic communication system according to Example 1 or 2, the first HSM further includes a second encryption unit that encrypts the application key stored in the first key management device. The storage unit further stores therein a second encryption key used in an encryption process in the second encryption unit.

Example 4. In the quantum cryptographic communication system according to any one of Examples 1 to 3, the first HSM further includes a third encryption unit that encrypts the application key supplied to a cryptographic application execution device that executes the cryptographic application. The storage unit further stores therein a third encryption key used in an encryption process in the third encryption unit.

Example 5. In the quantum cryptographic communication system according to Example 4, the first HSM shares the third encryption key with a third HSM of the cryptographic application execution device when initial setting of the quantum cryptographic communication system is performed.

Example 6. In the quantum cryptographic communication system according to any one of Examples 1 to 5, the reception unit receives an encrypted quantum encryption key from the first QKD device. The first HSM further includes a decryption unit that decrypts the encrypted quantum encryption key. The storage unit further stores therein a decryption key used in a decryption process in the decryption unit.

Example 7. The quantum cryptographic communication system according to any one of Examples 1 to 6, further includes a relay unit that further encrypts the application key encrypted by the first encryption key, with the quantum encryption key, and transmits the application key that is double encrypted by the first encryption key and the quantum encryption key to the second key management device.

Example 8. In the quantum cryptographic communication system according to Example 1, the first encryption unit uses the quantum encryption key as the first encryption key.

Example 9. The quantum cryptographic communication system according to Example 7 or 8, further includes a quantum key distribution network (QKDN) manager that determines an encryption method of an encryption process using the quantum encryption key, based on at least one of an accumulation quantity of the application key accumulated in the first key management device and an accumulation quantity of the quantum encryption key accumulated in the first key management device. The first key management device further includes a setting unit that sets the encryption method determined by the QKDN manager as the encryption method of the encryption process using the quantum encryption key.

Example 10. In the quantum cryptographic communication system according to Example 9, the QKDN manager determines the encryption method of the encryption process using the quantum encryption key, to be a first encryption method when the accumulation quantity of the quantum encryption key is less than or equal to a threshold QA, and determines the encryption method of the encryption process using the quantum encryption key, to be a second encryption method in which a consumption rate of the quantum encryption key is higher than in the first encryption method when the accumulation quantity of the quantum encryption key is more than the threshold QA.

Example 11. In the quantum cryptographic communication system according to Example 9, the QKDN manager determines the encryption method of the encryption process using the quantum encryption key, to be a first encryption method when the accumulation quantity of the quantum encryption key is less than or equal to a threshold QA, determines the encryption method of the encryption process using the quantum encryption key, to be a second encryption method in which a consumption rate of the quantum encryption key is higher than in the first encryption method when the accumulation quantity of the quantum encryption key subsequently becomes more than a threshold QB (QB > QA), and causes the encryption method of the encryption process using the quantum encryption key to be the second encryption method until the accumulation quantity of the quantum encryption key becomes less than or equal to the threshold QA again.

Example 12. In the quantum cryptographic communication system according to Example 9, the QKDN manager determines the encryption method of the encryption process using the quantum encryption key, to be a first encryption method when the accumulation quantity of the application key is less than or equal to a threshold GA, and determines the encryption method of the encryption process using the quantum encryption key, to be a second encryption method in which a consumption rate of the quantum encryption key is higher than in the first encryption method when the accumulation quantity of the application key is more than the threshold GA.

Example 13. In the quantum cryptographic communication system according to Example 9, the QKDN manager determines the encryption method of the encryption process using the quantum encryption key, to be a first encryption method when the accumulation quantity of the application key is less than or equal to a threshold GA, determines the encryption method of the encryption process using the quantum encryption key, to be a second encryption method in which a consumption rate of the quantum encryption key is higher than in the first encryption method when the accumulation quantity of the application key subsequently becomes more than a threshold GB (GB > GA), and causes the encryption method of the encryption process using the quantum encryption key to be the second encryption method until the accumulation quantity of the application key becomes less than or equal to the threshold GA again.

Example 14. In the quantum cryptographic communication system according to Example 9, the QKDN manager determines the encryption method of the encryption process using the quantum encryption key to be a first encryption method when the accumulation quantity of the quantum encryption key is less than or equal to a threshold QA and the accumulation quantity of the application key is less than or equal to a threshold GA, and determines the encryption method of the encryption process using the quantum encryption key, to be a second encryption method in which a consumption rate of the quantum encryption key is higher than in the first encryption method when the accumulation quantity of the quantum encryption key is more than the threshold QA or the accumulation quantity of the application key is more than the threshold GA.

Example 15. In the quantum cryptographic communication system according to Example 9, the QKDN manager determines the encryption method of the encryption process using the quantum encryption key, to be a first encryption method when the accumulation quantity of the quantum encryption key is less than or equal to a threshold QA and the accumulation quantity of the application key is less than or equal to a threshold GA, determines the encryption method of the encryption process using the quantum encryption key to be a second encryption method in which a consumption rate of the quantum encryption key is higher than in the first encryption method when the accumulation quantity of the quantum encryption key is more than a threshold QB (QB > QA) and the accumulation quantity of the application key is more than a threshold GB (GB > GA), and causes the encryption method of the encryption process using the quantum encryption key to be the second encryption method until the accumulation quantity of the quantum encryption key becomes less than or equal to the threshold QA and the accumulation quantity of the application key becomes less than or equal to GA again.

Example 16. In the quantum cryptographic communication system according to any one of Examples 10 to 15, the first encryption method is advanced encryption standard (AES). The second encryption method is one time pad (OTP).

Example 17. In the quantum cryptographic communication system according to Example 16, when the encryption method of the encryption process using the quantum encryption key is set to AES, the QKDN manager causes an update frequency of the quantum encryption key used in encryption by AES to be smaller as the accumulation quantity of the quantum encryption key is smaller.

Example 18. A key management device includes a reception unit and a hardware security module (HSM). The reception unit receives a quantum encryption key from a first quantum key distribution (QKD) device that shares the quantum encryption key with a second QKD device through QKD. The HSM includes a storage unit, a generation unit, and an encryption unit. The storage unit stores a first encryption key therein. The generation unit generates an application key used in an encryption process by a cryptographic application. The encryption unit encrypts, with the first encryption key, the application key transmitted to a key management device connected to the second QKD device.

Example 19. A key management method includes: receiving, by a reception unit, a quantum encryption key from a first quantum key distribution (QKD) device that shares the quantum encryption key with a second QKD device through QKD; storing a first encryption key by a storage unit of a hardware security module (HSM); generating, by a generation unit of the HSM, an application key used in an encryption process by a cryptographic application; and encrypting, by an encryption unit of the HSM, with the first encryption key, the application key transmitted to a key management device connected to the second QKD device.

## Claims

1. A quantum cryptographic communication system (100) comprising:
a first quantum key distribution (QKD) device (10a) that shares a quantum encryption key with a second QKD device through QKD (10b); and
a first key management device (20a), wherein
the first key management device (20a) includes:
a reception unit (22a) that receives the quantum encryption key from the first QKD device (10a); and
a first hardware security module (HSM) (26a), and the first HSM (26a) includes:
a storage unit that stores a first encryption key therein;
a generation unit (27a) that generates an application key used in an encryption process by a cryptographic application; and
a first encryption unit (28a) that encrypts, with the first encryption key, the application key transmitted to a second key management device (20b) connected to the second QKD device (10b).

2. The quantum cryptographic communication system (100) according to claim 1, wherein the first HSM (26a) shares the first encryption key with a second HSM (26b) of the second key management device (20b) when initial setting of the quantum cryptographic communication system (100) is performed.

3. The quantum cryptographic communication system (100) according to claim 1 or 2, wherein
the first HSM (26a) further includes a second encryption unit (29a) that encrypts the application key stored in the first key management device (20a), and
the storage unit further stores therein a second encryption key used in an encryption process in the second encryption unit (29a).

4. The quantum cryptographic communication system (100) according to any one of claims 1 to 3, wherein
the first HSM (26a) further includes a third encryption unit (32a) that encrypts the application key supplied to a cryptographic application execution device that executes the cryptographic application, and
the storage unit further stores therein a third encryption key used in an encryption process in the third encryption unit (32a).

5. The quantum cryptographic communication system (100) according to claim 4, wherein the first HSM (26a) shares the third encryption key with a third HSM of the cryptographic application execution device when initial setting of the quantum cryptographic communication system (100) is performed.

6. The quantum cryptographic communication system (100) according to any one of claims 1 to 5, wherein
the reception unit (22a) receives an encrypted quantum encryption key from the first QKD device (10a),
the first HSM (26a) further includes a decryption unit that decrypts the encrypted quantum encryption key, and
the storage unit further stores therein a decryption key used in a decryption process in the decryption unit.

7. The quantum cryptographic communication system (100) according to any one of claims 1 to 6, further comprising a relay unit that further encrypts the application key encrypted by the first encryption key, with the quantum encryption key, and transmits the application key that is double encrypted by the first encryption key and the quantum encryption key to the second key management device (20b).

8. The quantum cryptographic communication system (100) according to claim 1, wherein the first encryption unit (28a) uses the quantum encryption key as the first encryption key.

9. The quantum cryptographic communication system (100) according to claim 7 or 8, further comprising a quantum key distribution network (QKDN) manager (60) that determines an encryption method of an encryption process using the quantum encryption key, based on at least one of an accumulation quantity of the application key accumulated in the first key management device (20a) and an accumulation quantity of the quantum encryption key accumulated in the first key management device (20a), wherein
the first key management device (20a) further includes a setting unit that sets the encryption method determined by the QKDN manager (60) as the encryption method of the encryption process using the quantum encryption key.

10. The quantum cryptographic communication system (100) according to claim 9, wherein the QKDN manager (60) determines the encryption method of the encryption process using the quantum encryption key, to be a first encryption method when the accumulation quantity of the quantum encryption key is less than or equal to a threshold QA, and determines the encryption method of the encryption process using the quantum encryption key, to be a second encryption method in which a consumption rate of the quantum encryption key is higher than in the first encryption method when the accumulation quantity of the quantum encryption key is more than the threshold QA.

11. The quantum cryptographic communication system (100) according to claim 9, wherein the QKDN manager (60) determines the encryption method of the encryption process using the quantum encryption key, to be a first encryption method when the accumulation quantity of the quantum encryption key is less than or equal to a threshold QA, determines the encryption method of the encryption process using the quantum encryption key, to be a second encryption method in which a consumption rate of the quantum encryption key is higher than in the first encryption method when the accumulation quantity of the quantum encryption key subsequently becomes more than a threshold QB (QB > QA), and causes the encryption method of the encryption process using the quantum encryption key to be the second encryption method until the accumulation quantity of the quantum encryption key becomes less than or equal to the threshold QA again.

12. The quantum cryptographic communication system (100) according to claim 9, wherein the QKDN manager (60) determines the encryption method of the encryption process using the quantum encryption key, to be a first encryption method when the accumulation quantity of the application key is less than or equal to a threshold GA, and determines the encryption method of the encryption process using the quantum encryption key, to be a second encryption method in which a consumption rate of the quantum encryption key is higher than in the first encryption method when the accumulation quantity of the application key is more than the threshold GA.

13. The quantum cryptographic communication system (100) according to claim 9, wherein the QKDN manager (60) determines the encryption method of the encryption process using the quantum encryption key, to be a first encryption method when the accumulation quantity of the application key is less than or equal to a threshold GA, determines the encryption method of the encryption process using the quantum encryption key, to be a second encryption method in which a consumption rate of the quantum encryption key is higher than in the first encryption method when the accumulation quantity of the application key subsequently becomes more than a threshold GB (GB > GA), and causes the encryption method of the encryption process using the quantum encryption key to be the second encryption method until the accumulation quantity of the application key becomes less than or equal to the threshold GA again.

14. The quantum cryptographic communication system (100) according to claim 9, wherein the QKDN manager (60) determines the encryption method of the encryption process using the quantum encryption key to be a first encryption method when the accumulation quantity of the quantum encryption key is less than or equal to a threshold QA and the accumulation quantity of the application key is less than or equal to a threshold GA, and determines the encryption method of the encryption process using the quantum encryption key, to be a second encryption method in which a consumption rate of the quantum encryption key is higher than in the first encryption method when the accumulation quantity of the quantum encryption key is more than the threshold QA or the accumulation quantity of the application key is more than the threshold GA.

15. The quantum cryptographic communication system (100) according to claim 9, wherein the QKDN manager (60) determines the encryption method of the encryption process using the quantum encryption key, to be a first encryption method when the accumulation quantity of the quantum encryption key is less than or equal to a threshold QA and the accumulation quantity of the application key is less than or equal to a threshold GA, determines the encryption method of the encryption process using the quantum encryption key to be a second encryption method in which a consumption rate of the quantum encryption key is higher than in the first encryption method when the accumulation quantity of the quantum encryption key is more than a threshold QB (QB > QA) and the accumulation quantity of the application key is more than a threshold GB (GB > GA), and causes the encryption method of the encryption process using the quantum encryption key to be the second encryption method until the accumulation quantity of the quantum encryption key becomes less than or equal to the threshold QA and the accumulation quantity of the application key becomes less than or equal to GA again.

16. The quantum cryptographic communication system (100) according to any one of claims 10 to 15, wherein
the first encryption method is advanced encryption standard (AES), and
the second encryption method is one time pad (OTP).

17. The quantum cryptographic communication system (100) according to claim 16, wherein when the encryption method of the encryption process using the quantum encryption key is set to AES, the QKDN manager (60) causes an update frequency of the quantum encryption key used in encryption by AES to be smaller as the accumulation quantity of the quantum encryption key is smaller.

18. A key management device (20a) comprising:
a reception unit (22a) that receives a quantum encryption key from a first quantum key distribution (QKD) device that shares the quantum encryption key with a second QKD device (10b) through QKD; and
a hardware security module (HSM) (26a), wherein
the HSM (26a) includes:
a storage unit that stores a first encryption key therein;
a generation unit (27a) that generates an application key used in an encryption process by a cryptographic application; and
an encryption unit(28a) that encrypts, with the first encryption key, the application key transmitted to a key management device (20b) connected to the second QKD device (10b).

19. A key management method comprising:
receiving, by a reception unit (22a), a quantum encryption key from a first quantum key distribution (QKD) device that shares the quantum encryption key with a second QKD device (10b) through QKD;
storing a first encryption key by a storage unit of a hardware security module (HSM);
generating, by a generation unit (27a) of the HSM, an application key used in an encryption process by a cryptographic application; and
encrypting, by an encryption unit (22a) of the HSM (26a), with the first encryption key, the application key transmitted to a key management device (20b) connected to the second QKD device (10b).
